# EUROPEAN PATENT APPLICATION

(11) **EP 1 819 094 A1**
(43) Date of publication of application: **15.08.2007**
(21) Application number: 06255518.0
(22) Date of filing: 26.10.2006
(51) Int. Cl.: H04L 12/24

(54) **Script language based network device configuration management system and method**

(30) Priority: 28.11.2005 CN 05124309
(71) Applicant: Huawei Technologies Co., Ltd., Longgang District Shenzhen Guangdong 518129 (CN)
(72) Inventor: Li, Lixiong, 518129 Huawei Administration Building, Shenzhen Guangdong Province 518129 (CN)
(74) Representative: Vinsome, Rex Martin

(57) **Abstract**

This invention discloses a network device configuration management system comprising at least one control terminal for an operator to enter one or more network device configurations, at least one user interface module for generating one or more first command scripts written in a general-purpose markup language in response to operators' inputs on network device configuration, and at least one management server for generating network device configuration instructions from one or more second command scripts written also in the general-purpose markup language to configure corresponding network devices, wherein the second command scripts are retrieved by the corresponding first command scripts, and the network devices are configured by computer terminal operations and by adding new command scripts for new configuration functions without software programming, and the general-purpose markup language ensure interoperability of various components of the network device configuration management system.

## Description

### CROSS REFERENCE

The present application claims the priority of Chinese application 200510124309.2, which was filed on November 28, 2005.

### BACKGROUND OF THE INVENTION

The present invention relates generally to network device management and maintenance, and, more particularly, to method and system for configuring network devices.

The advancement of the technologies of the telecommunication industry creates new business opportunities for network service providers and better service for customers. With the development of new network devices, there is an increase in the number of configurable parameters in a network device. The amount of work required to configure and manage network devices grows exponentially. How to reduce the cost of adding new functionalities, to create new services, and to improve the rate of deployment becomes increasingly important for network service providers.

In conventional methods, software developers need to develop new software when adding a new function or modify an existing function. In other words, for every new configuration function, the developer needs to write a new application programming interface (API) to support it.

The conventional method of developing a new configuration function in the configuration management system involves the following steps:
Step 1. Using Java or C++ to develop a front-end interface.
Step 2. Defining the command interface between the front-end user interface and back-end management server by means of high-level language. Typically, Abstract Syntax Notation (ASN) is used to define the command interface.
Step 3. Compiling the ASN command to create Java or C++ class object.
Step 4. Defining the command interface between the back-end server and network device.
Step 5. Developing a software function (usually in C++) that issues a command to the network device.
Step 6. Developing a software function to receive the data returned from the network device after executing the command issued by the back-end server.
Step 7. Developing a software function to process the data returned from the network device after executing the command issued by the back-end server.
Step 8. Developing a software function to store the data permanently in management database.
Step 9. Re-compiling the source codes of the front-end user interface to incorporate the changes.
Step 10. Re-compiling the back-end server software to incorporate the new configuration function.

In summary, in order to add a new configuration function using the conventional method, the operator is required to develop software (1) for the front-end user interface, (2) for the command interface between the front-end user interface and back-end management server, and (3) for the command interface between the back-end management server and network device. In other words, the conventional method does not have a unified framework to develop command interface for a new configuration function.

After establishing the command interfaces between the front-end user interface, the back-end management server and network device, the network device configuration management system needs to process the data returned from the network device and to store the outcome of the operation in the management database. In order to do so, the operator needs to develop software (1) that issues a command to the network device, (2) that receives and processes the data returned from the network device after executing the command, and (3) that writes the data to the management database.

After developing all the software to support the addition of a new configuration function, the system software still needs to be compiled, debugged and tested before the operator can start using the new function. The weakness of the conventional method for the network device configuration management system is that it does not support real-time update of the configuration management function.

What is needed an improved system for network configuration for communication systems.

### SUMMARY OF THE INVENTION

This invention discloses a network device configuration management system comprising at least one control terminal for an operator to enter one or more network device configurations, at least one user interface module for generating one or more first command scripts written in a general-purpose markup language in response to operators' inputs on network device configuration, and at least one management server for generating network device configuration instructions from one or more second command scripts written also in the general-purpose markup language to configure corresponding network devices, wherein the second command scripts are retrieved by the corresponding first command scripts, and the network devices are configured by computer terminal operations and by adding new command scripts for new configuration functions without software programming, and the general-purpose markup language ensure interoperability of various components of the network device configuration management system.

The construction and method of operation of the invention, however, together with additional objectives and advantages thereof will be best understood from the following description of specific embodiments when read in connection with the accompanying drawings.

### BRIEF DESCRIPTION OF THE DRAWINGS

FIG. 1 is a block diagram of a network device configuration management system according to one embodiment of the present invention.

FIG. 2 presents a diagram showing a computer screen layout for the front-end user interface according to the embodiment of the present invention of FIG. 1.

FIG. 3 presents a block diagram showing the command interface module according to the embodiment of the present invention of FIG. 1.

FIG. 4 presents a block diagram showing function module of the back-end management server according to the embodiment of the present invention of FIG.1.

FIG. 5 presents a flowchart illustrating the operations of the network device configuration management system according to the embodiment of the present invention of FIG. 1.

FIG. 6 presents a flowchart illustrating steps for adding a new configuration function in the network device configuration management system according to the embodiment of the present invention of FIG. 1.

FIG. 7 is a computer terminal screen shot of the command interface module.

FIG. 8 is a computer terminal screen shot of a parameter/ attribute sub-panel of the command interface module.

### DETAILED DESCRIPTION OF THE INVENTION

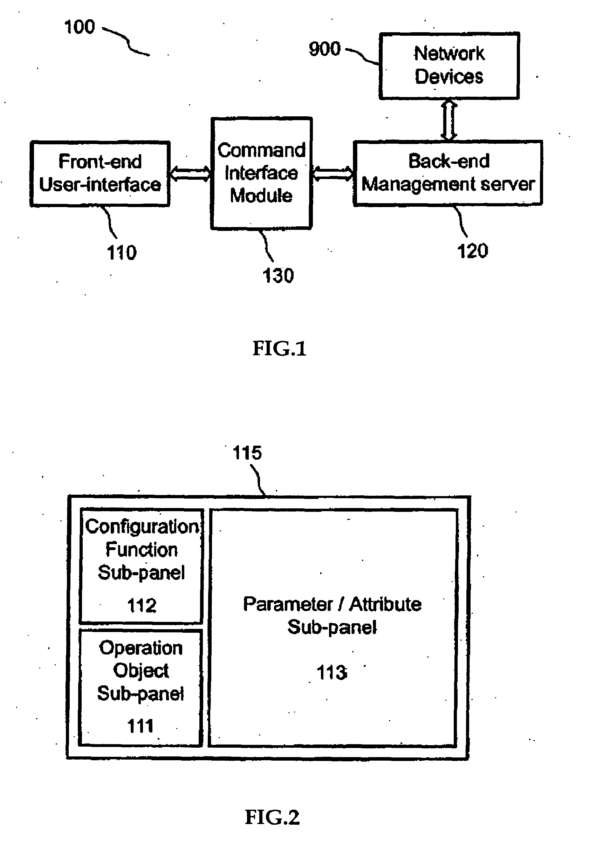

FIG. 1 is a block diagram of a network device configuration management system (100) according to one embodiment of the invention. The network device configuration management system (100) includes a front-end user interface (110), a back-end management server (120) and a command interface module (130), which interfaces the front-end user interface and the back-end management server. The network device configuration management system (100) manages network devices (900).

The front-end user interface (110) provides a unified framework which displays the information of network devices, the information about the functions and attributes of network devices, and the attribute table of each function. The front-end user interface (110) takes the input from the operator and generates configuration command scripts.

The back-end management server (120) processes the command scripts set by the operator, translates and issues configuration instructions to the network devices (900), and returns outcomes of the operations.

The command interface module (130) establishes a conduit between the front-end user interface (110) and the back-end management server (120). It forwards the operator's command script from the front-end user interface (110) to the back-end management server (120) and returns the outcomes of the operations from the network devices (900) back to the front-end user interface (110).

FIG. 2 presents a diagram showing a computer screen layout (115) for the front-end user interface (110). The computer screen layout (115) includes three sub-panels. They are an operation object sub-panel (111), a configuration function sub-panel (112), and a parameter/attribute sub- panel (113). The computer screen layout (115) and the configuration functions of the front-end user interface (110) are defined by a configuration file.

The operation object sub-panel (111) displays all the devices that are managed by the network device configuration management system (100). It provides the operator an easy-to-use interface to select one or more target devices for configuration.

The configuration function sub-panel (112) displays all the functions and configurable parameters of the network devices (900) that appear on the operation object sub-panel (111).

The parameter/attribute sub-panel (113) displays the attributes and the information of functions and the configurable parameters of a network device (900) that appear on the configuration function sub-panel (112).

The configuration file of the front-end user interface (110) defines the layout of the configuration function sub-panel (112) and specifies the XML script for the parameter/attribute sub-panel (113). It defines the layered structure of the configuration function menu tree of the configuration function sub-panel (112).

The XML script of the parameter/attribute sub-panel (113) defines the attribute table and layout of the sub-panel. It defines the look-and-feel of the user interface, manuals and buttons.

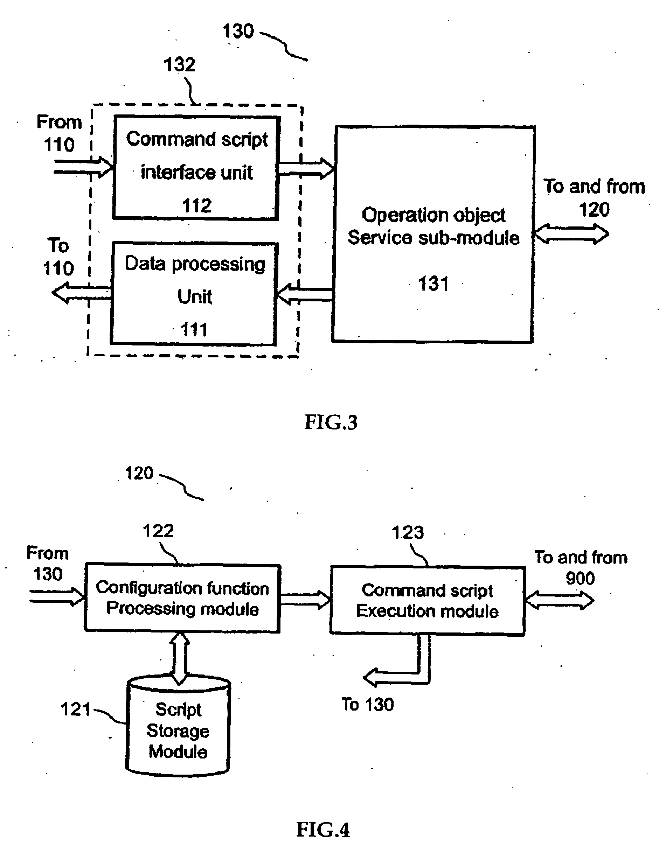

FIG. 3 presents a block diagram showing the command interface module (130) between the front-end user interface (110) and back-end management server (120). The command interface module (130) includes two functional sub-modules, an operation object service sub-module (131) and a configuration service sub-module (132).

The operation object service sub-module (131) relays the information of the target network device (900), selected by the operator in operational object sub-panel (111), to the back-end management server (120). The configuration service sub-module (132) translates and relays the command script, generated by the input of operator from the front-end user interface (110), to the back-end management server (120) and returns the outcome of the operation to update the parameter/ attribute sub-panel (113).

The configuration service sub-module (132) is further divided into two function units. Function unit (1321) is the "command script interface" unit which translates and relays the command script received from the frond-end user interface (110) to the back-end management server (120). Functional unit (1322) is the "data processing" unit which translates and relays the outcome of the operation returned from the back-end management server (120).

The XML script in the command script interface module supports the following configuration functions:
- querying all network devices about a specific configuration function,
- querying all network devices about a specific attribute,
- querying a network device about the attributes of all configuration functions,
- setting the value of an attribute,
- creating records,
- deleting records,
- setting operation method, and
- querying the attributes of all configurable parameters.

FIG. 4 presents a block diagram showing function module of the back-end management server (120). The back-end management server (120) includes three sub-modules, a script storage module (121), a configuration function processing module (122) and a command script execution module (123).

The script storage unit (121) holds the command script for each configuration function. The configuration function processing module (122) parses the command script received from the command interface module (130) and retrieves the script for the corresponding configuration function from the script storage module (121).

The command script execution module (123) parses and executes the script retrieved from the configuration function processing module (122) and issues configuration instructions to the network device (900) and report the outcome of the operations to the command interface module (130). The parsing and executing of the script is a two-pass process. In a first pass, the script execution module (123) compiles the script and translates it into a sequence of instructions. In a second pass, the script execution module (123) issues the configuration instructions to the network device (900).

The back-end management server (130) configures and manages the network device (900) with an embedded virtual machine. The virtual machine supports mathematical operations, logical operations, data analysis functions, data translation functions and executing external scripts.

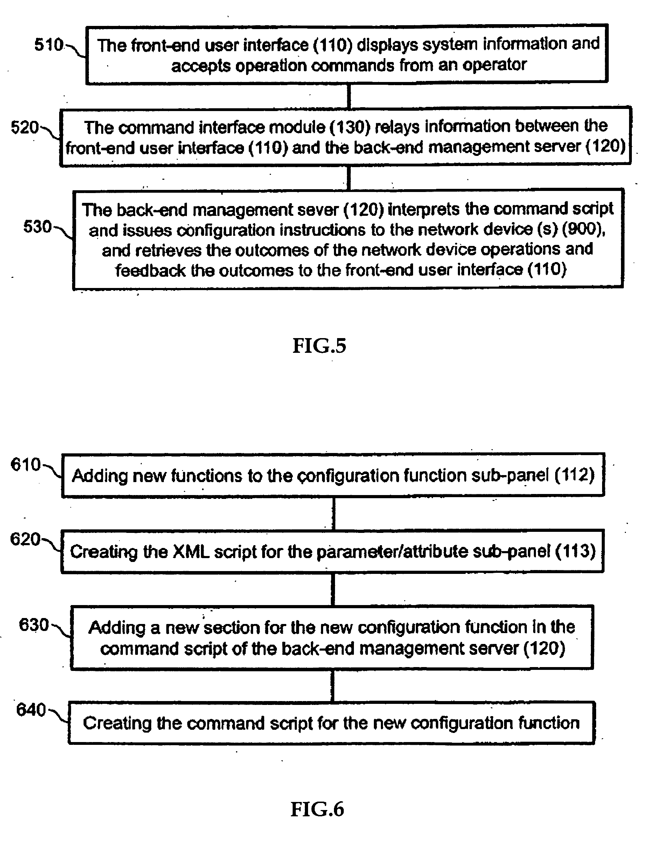

FIG. 5 presents a flowchart (510) illustrating the operations of the network device configuration management system (100). The function of each step is listed below:
- Step 510: In this step, the front-end user interface (110) displays system information and accepts operation commands from an operator. The operator selects the target network device(s) (900) from the operation object sub-panel (111), chooses the configuration functions from the configuration function sub-panel (112) and modifies the values in the parameter/ attribute sub-panel (113). The front-end user interface (110) generates the command script according to the operator's input and sends it to the command interface module (130).
- Step 520: The command interface module (130) relays information between the front-end user interface (110) and the back-end management server (120).
- Step 530: The back-end management sever (120) interprets the command script and issues configuration instructions to the network device (s) (900). It also retrieves the outcomes of the network device operations and feedback the outcomes to the front-end user interface (110). The functions of the back-end manager server include parsing the command script, retrieving the configuration script from the script storage module, translating the configuration script into configuration instructions and issuing the configuration instructions to the network devices.

The XML script specifies the operations including issuing the configuration instruction, retrieving the MML (Man Machine Language) report, processing the MML report, and storing the return data in the database. The back-end management server allows the operator to retrieve data either from the database of the management server or from the network device directly. It also supports the installation, addition and deletion of a new configuration function. All the operations are done under the unified framework of this invention and there is no need to develop new software.

FIG. 6 presents a flowchart illustrating steps for adding a new configuration function in the network device configuration management system (100). The function of each step is listed below:
- Step 610: Adding new functions to the configuration function sub-panel (112),
- Step 620: Creating the XML script for the parameter/attribute sub-panel (113),
- Step 630: Adding a new section for the new configuration function in the XML command script of the back-end management server (120),
- Step 640: Creating the XML script for the new configuration function.

To add a new function in the network device configuration management system (100), the operator only needs to specify a new XML script for the new configuration function and to create the corresponding configuration script according to one embodiment of the present invention.

Because the task of adding a new configuration function is accomplished by simply adding a new XML script, instead of developing new software, this invention greatly reduces the time it takes to add a new function in the network device configuration management system (100). To modify an existing function, the operator only needs to modify the script instead of writing source code. Also, because XML is a general-purpose markup language, it ensures interoperability of various components in the network device configuration management system (100).

Three sets of examples are provided to better describe the network device configuration management system (100) and to further explain the concept of this invention. Each set of examples demonstrates one major component of the network device configuration management system (100).

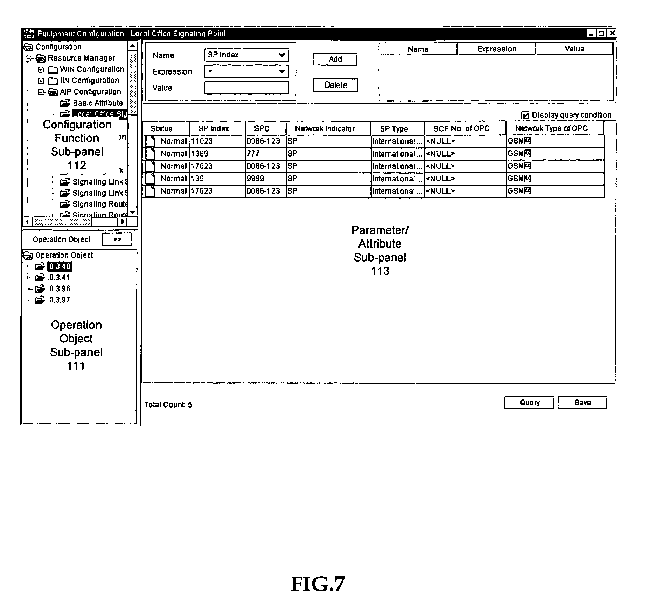

FIG. 7 is a screen shot of the front-end user interface (110). The front-end user interface (110) has three sub-panels and each of the sub-panels has a menu tree or a table. The configuration function menu tree is in the configuration function sub-panel (112). The operation object menu tree is in the operation object sub-panel (111). The attributes table is in the parameter/attribute sub-panel (113). All sub-panels are generated automatically according to the definition in the configuration file.

The operation object menu tree in the operation object sub-panel provides an easy-to-use interface for the operator to select one or more network devices to perform configuration operations. The configuration menu tree in the configuration function sub-panel is organized as a multilevel menu tree of configuration functions that describes all the configurable parameters. The parameter/attribute sub-panel includes the attribute table for rules, attribute data, buttons and right click menu.

The configuration file of the front-end user interface contains the information of the layout and configuration functions for the configuration function sub-panel. It describes the levels and relationships of configuration function objects in the configuration menu tree and whether it supports a single selection or multiple selections. It also specifies an XML script that describes the layout of the parameter/attribute sub-panel.

Following is the syntax of the statement in the configuration file. 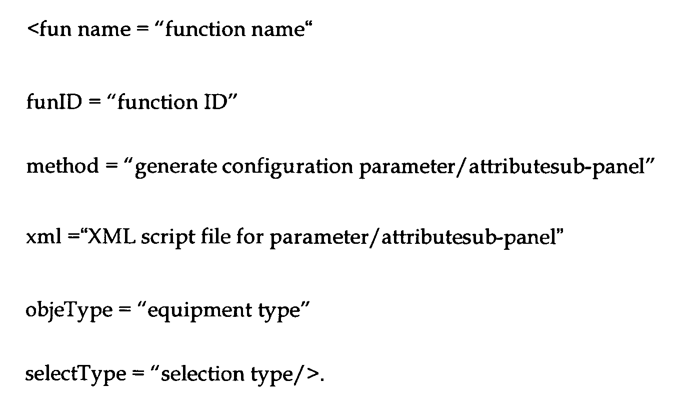 The equipment type could be a network device, an interface module in a network device, or a network port on an interface module. The selection type is either a single selection or multiple selections.

Below is a snippet of a configuration file of a configuration function sub-panel. The script generates a three-level configuration menu tree. The top level of the tree is the resource management. The second level tree of the resource management is the device configuration (Dev_A configuration). For example, WAN configuration, IIN configuration and etc. The third level of the tree, the sub-level of Dev_A, is the configuration attributes of Dev_A. The first attribute at the third level of the tree is the basic attributes, and the second attribute is the version history.

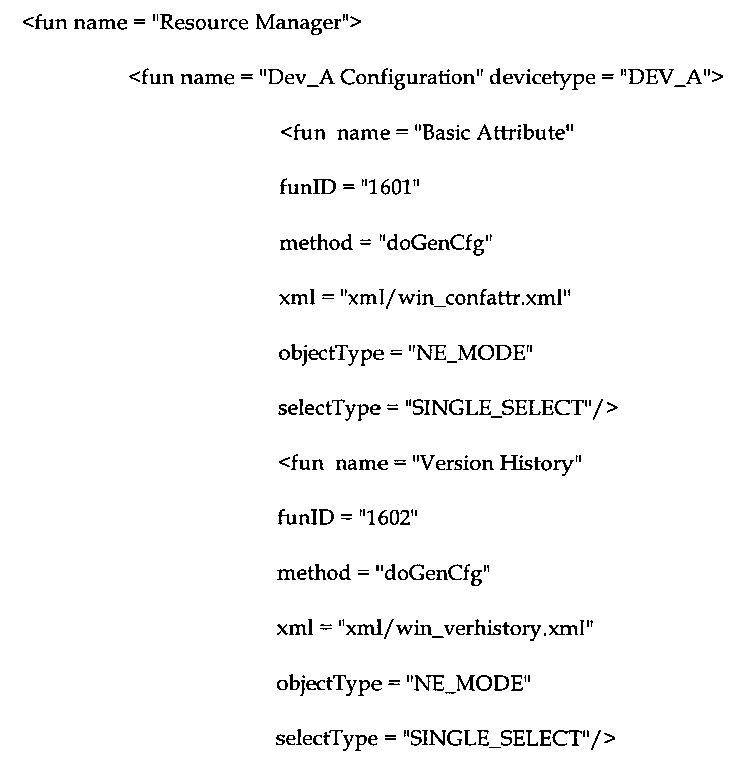

The XML script, xml = " ... ", describes how to create a three-section parameter/attribute sub-panel. The three sections are the attribute table, right click menus and buttons. The XML script below defines a parameter/attribute sub-panel for "AIPRouteInfoTab".

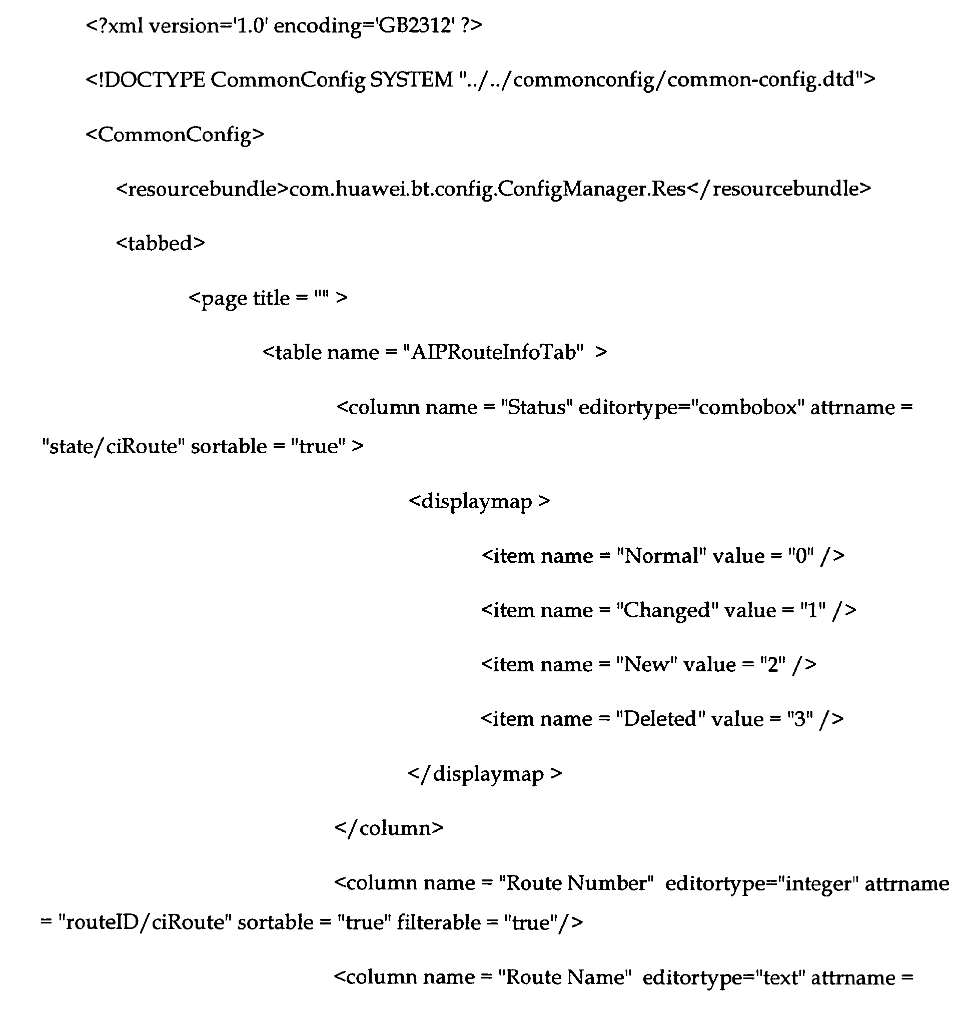

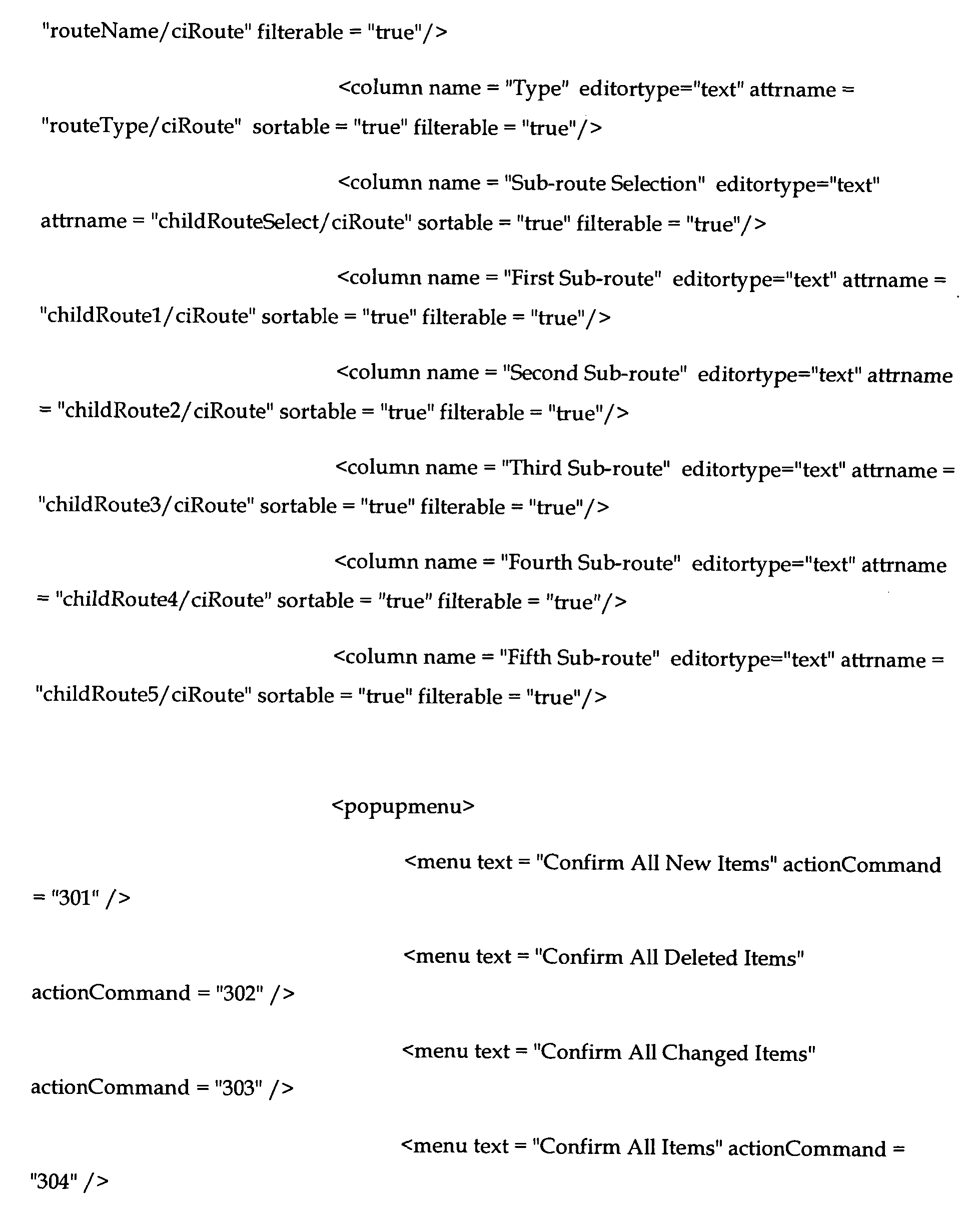

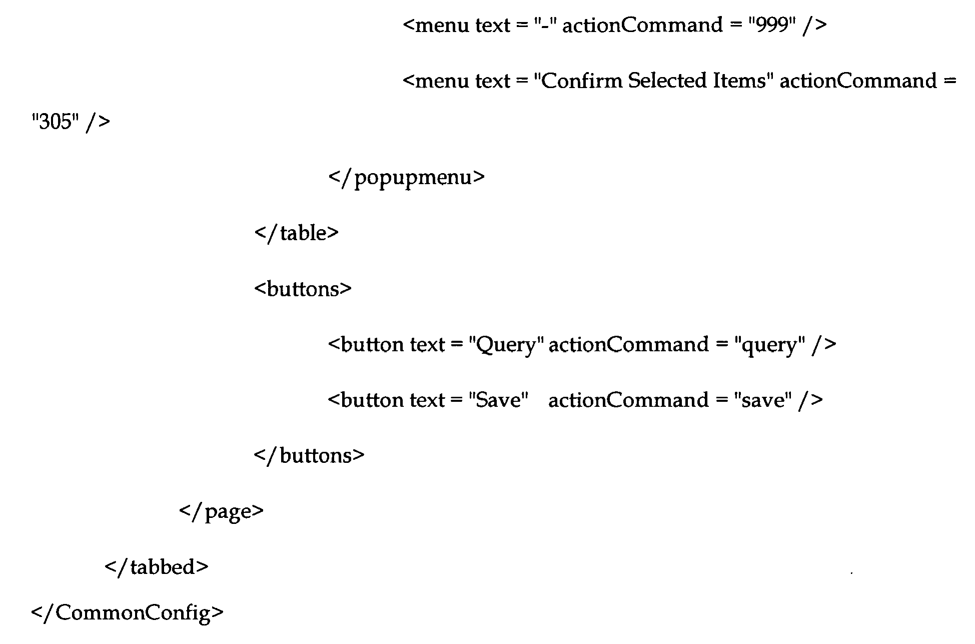

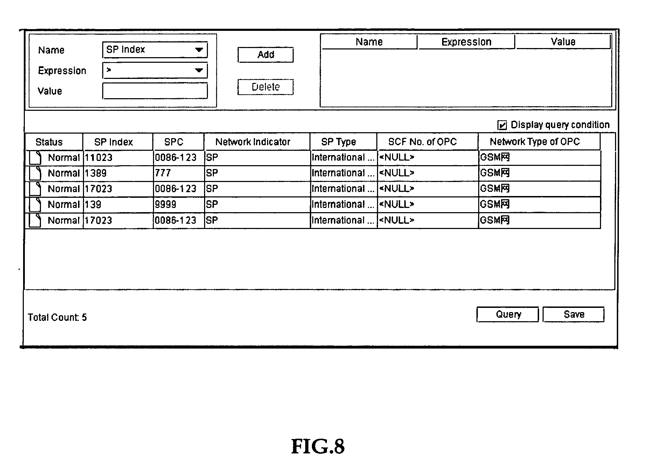

The XML tag in the section labeled <table> defines the layout of the attribute table. Within the <table> section, there are several <column> sections. A <column> section defines column elements in the attribute table. Below is a snippet of the XML script that defines a column of the attribute table. 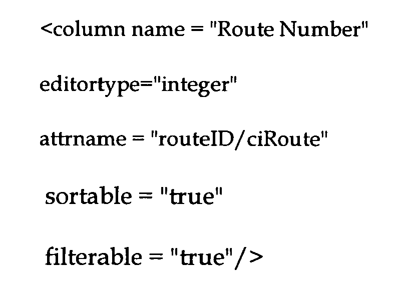
- "name" field defines the name of the column.
- "editortype" field defines the attribute of the data type. The data type could be an integer, a floating-point number or a text string.
- "attrname" field is the record name of this column of this table in the database. The record is addressed with the format of "columnName/TableName". In the case above, the record name for this column in the database is "routeID/ciRoute".
- "sortable" field specifies whether this column is sortable.
- "filterable" indicates whether this column can be used as one of the filter rules.
The <popmenu> section defines a right click menu. It includes several sub-items defined by <menu... > tag. Each <menu... > tag defines the name (text ="...") of the sub-item and action (actionCommand = "... ") it will take when the operator selects this sub-menu. The <buttons> section defines all buttons in the parameter/attributesub-panel. It includes several sub-items defined by <button... > tag. Each < button ... > tag defines the name (text ="...") of the button and action (actionCommand = "...") it will take when the operator push this button.

A high level language, IDL (Interface Definition Language), is chosen as the communication protocol between the front-end user interface and the back-end management server. The command interface module translates and relays the IDL command between the front-end user interface and the back-end management server. The command interface module includes two sub-modules, the operation object service module and the configuration service module. Below are some examples of IDL command.

### Example 1.

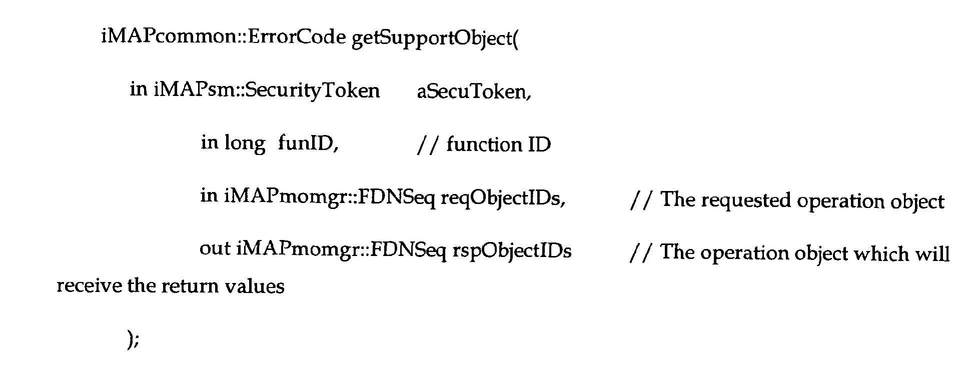

This command is called by the operator to query all network devices to find out whether they support a configuration function defined by the function ID. The operator selects "query" from the parameter/attribute sub-panel for a specific configuration function. The front-end interface sends the getSupportObject() command to the back-end management server.
- aSecuToken is the security token.
- funID is the function ID
- reqObjectIDs is the operational object ID of a network device. If this field is not NULL, the command only queries the network device with object ID defined in this field. If this field is left empty, the back-end management server will query all network devices managed by this network device configuration management system (100).
- rspObjectIDs is the return value that contains IDs of all network devices that support this function and their ID is specified in the reqObjectIDs field.

### Example 2.

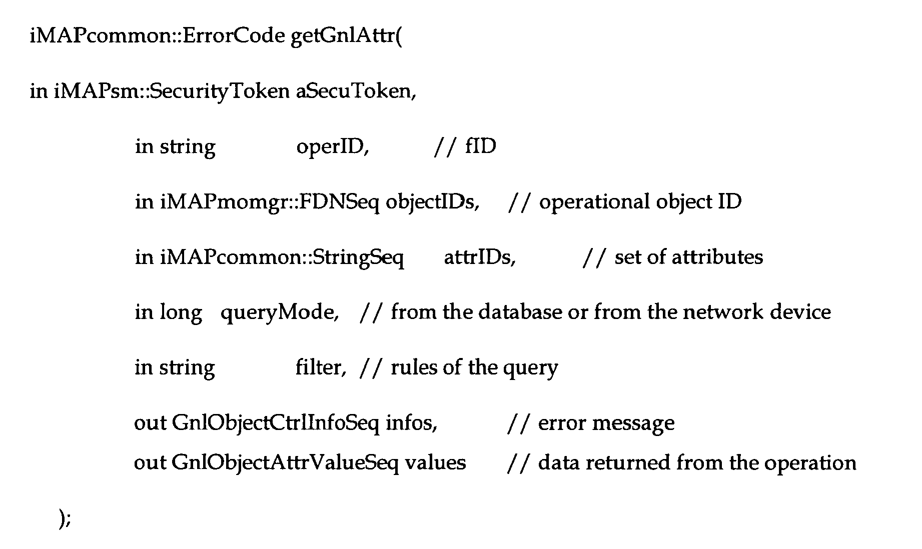

The above codes query the network device for the value of the attributes specified by the attrIDs.

Example 3. 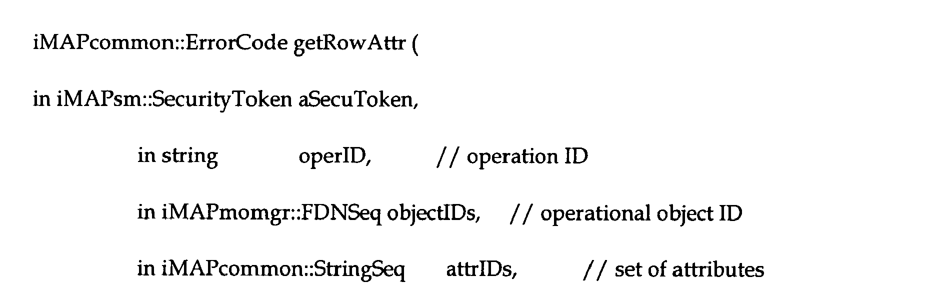 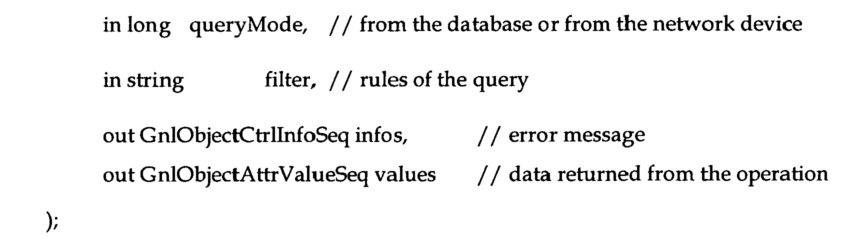 The above example is for querying the values of attributes for a network device.
- aSecuToken is the security token.
- operID is the operation ID
- objectIDs is the ID of a network device
- attrIDs is the set of attributes. Every attribute is represented in the form of "attribute name/table name".
- queryMode specifies how to retrieve information about the attributes. The information about the attributes can be retrieved from the database of the management server or from the network device. If the information is retrieved from the network device, the management server will update its database with the latest information.
- filter specifies the rules of the query. It specifies things such as the range of the value.
- info hold the error message returned from the operation. The length of infos is 0 if there is no error.
- Values hold the data returned from the operation.

Example 4. 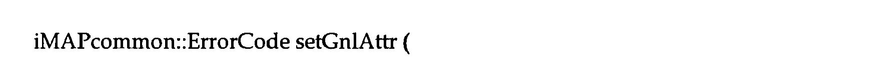 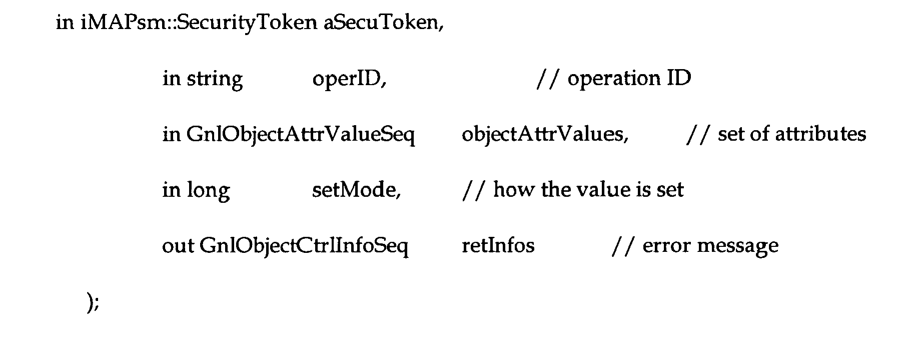 The primary function of the above codes are for setting attribute values, wherein
- aSecuToken is the security token
- operID is the operation ID
- objectAttrValues is the values of the attributes. Every attribute is represent in the form of "attribute name/table name"
- setMode specifies how the value is set
- retInfos holds the error message returns from the operation, and the length of retInfos is 0 if there is no error.

Example 5. 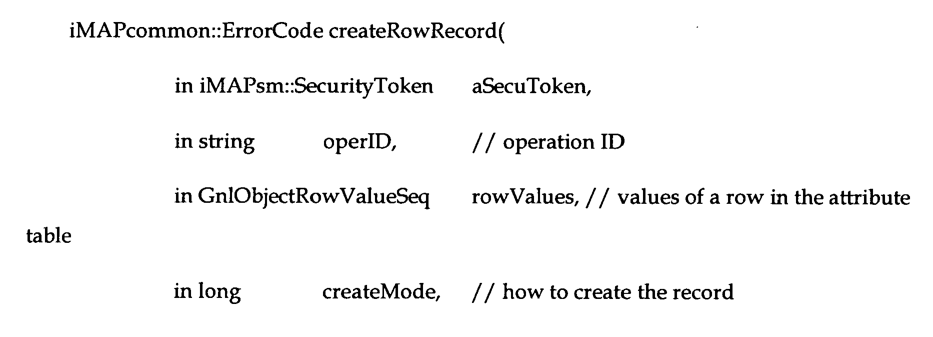 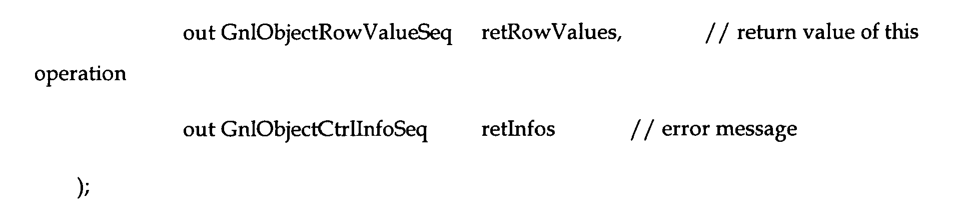 The above codes are for creating a record, wherein
- aSecuToken is the security token
- operID is the operation ID
- rowValues is the values of a row in the attribute table. It includes operation object ID of the target network device, the attributes name which is represented by the "attribute name/ table name" and value of attributes.
- attrIDs is the set of attributes. Every attribute is represented in the form of "attribute name/table name".
- creatMode specifies how to create the record.
- retRowValus holds the return value of this operation. It includes the object ID of the new record, attribute name in the form of "attribute name/table name" and value of the attribute.
- retInfos holds the error message returned from the operation, and the length of retInfos is 0 if there is no error.

Example 6 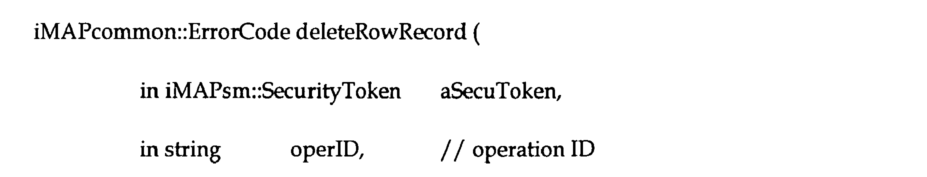 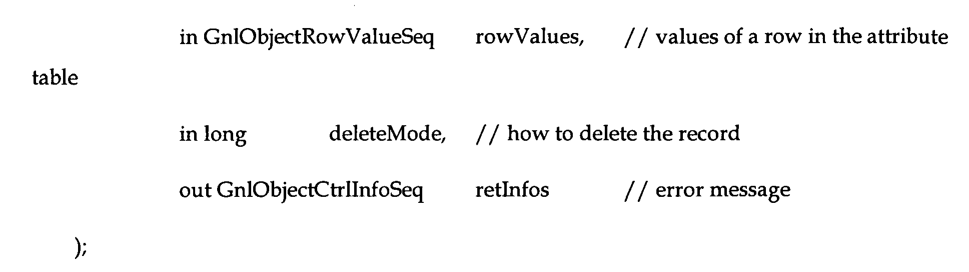 Detail Description: Deleting a record.
- aSecuToken is the security token.
- operID is the operation ID
- rowValues is the values of a row in the attribute table. It includes operational object ID of the target network device, the attributes name which is represented by the "attribute name/ table name" and value of attributes.
- attrIDs is the set of attributes. Every attribute is represented in the form of "attribute name/table name".
- deleteMode specifies how to delete the record.
- retRowValus holds the return value of this operation. It includes the object ID of the new record, attribute name in the form of "attribute name/table name" and value of the attributes.
- retInfos holds the error message returned from the operation. The length of retInfos is 0 if there is no error.

Example 7 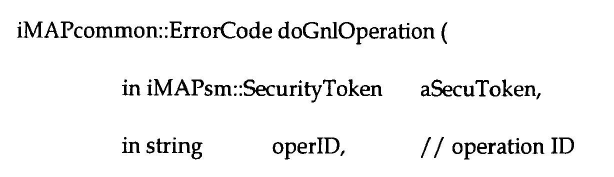 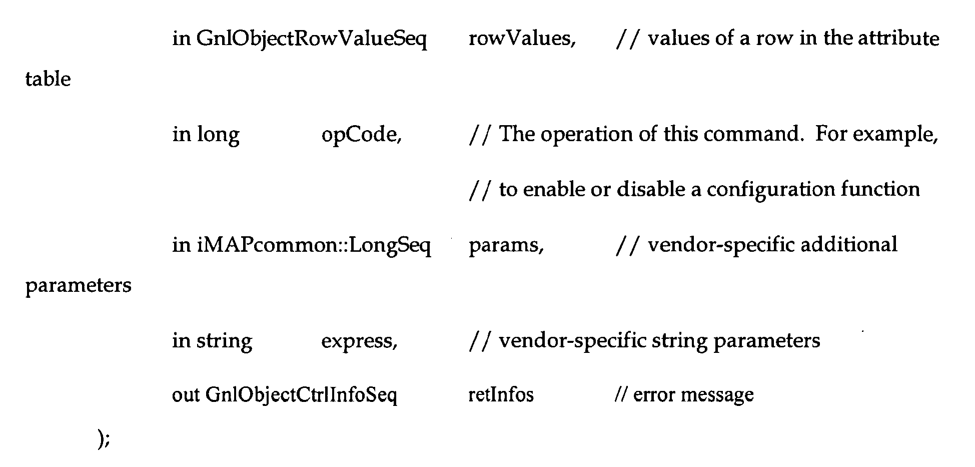 Detail Description: Defining a general operation. The back-end management server executes the command specified by the opCode.
- aSecuToken is the security token.
- operID is the operation ID
- rowValues is the values of a row in the attribute table. It includes operation object ID of the target network device, the attribute name which is represented by the "attribute name/table name" and value of attributes.
- opCode defines the operation of this command. For example, to enable or disable a configuration function.
- params holds additional parameters. This field is vendor-specific.
- express holds additional string parameters. This field is vendor-specific.
- retInfos holds the error message returned from the operation. The length of retInfos is 0 if there is no error.

Example 8 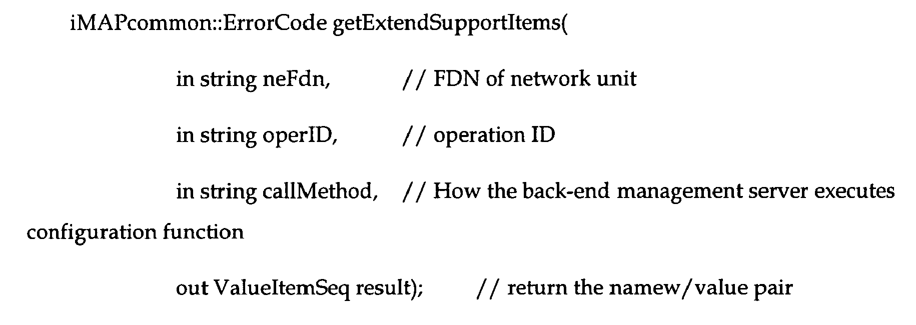 Detail Description: When an attribute of a configuration function is a dynamic ComBoBox, the configuration function calls this command to acquire all configurable items.

Example 9 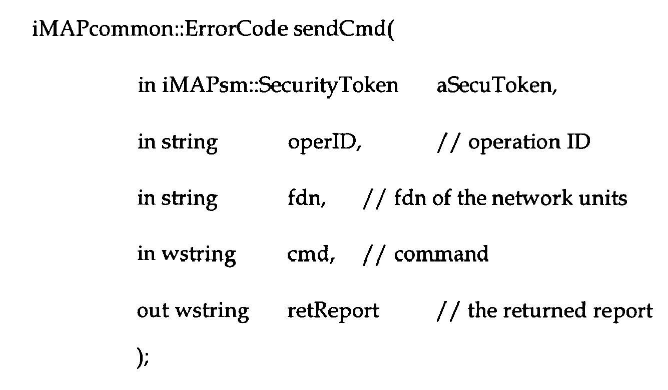 Detail Description: The command interface module sends the configuration command received from the front-end user interface and translates and relays it to the back-end management server. The back-end management server issues the configuration instruction to the network devices and relays the return values back to the front-end user interface.

Example for Back-End Management Server

When the back-end management server receives a command script from the command interface module, it uses the embedded virtual machine to execute the configuration command. The back-end management server holds the XML scripts for all configuration functions.
For example, the following XML command script defines the configuration function of functione ID 1301. 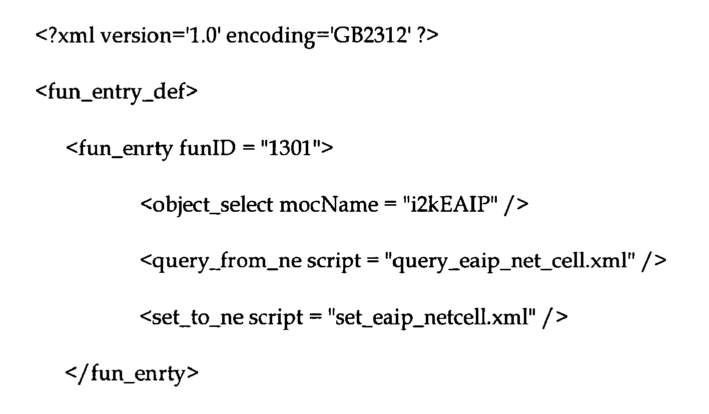 Configuration function 1301 targets network device "i2kEAIP" which is specified in object_select. The XML tag <*name* script = > defines the operation for a configuration function. "query_eaip_net_cell.xml" script retrieves information from the network device and "set_eaip_netcell.xml" script sets the attributes for some parameters.

Below is an example of an XML script that updates the routing information of a network device.

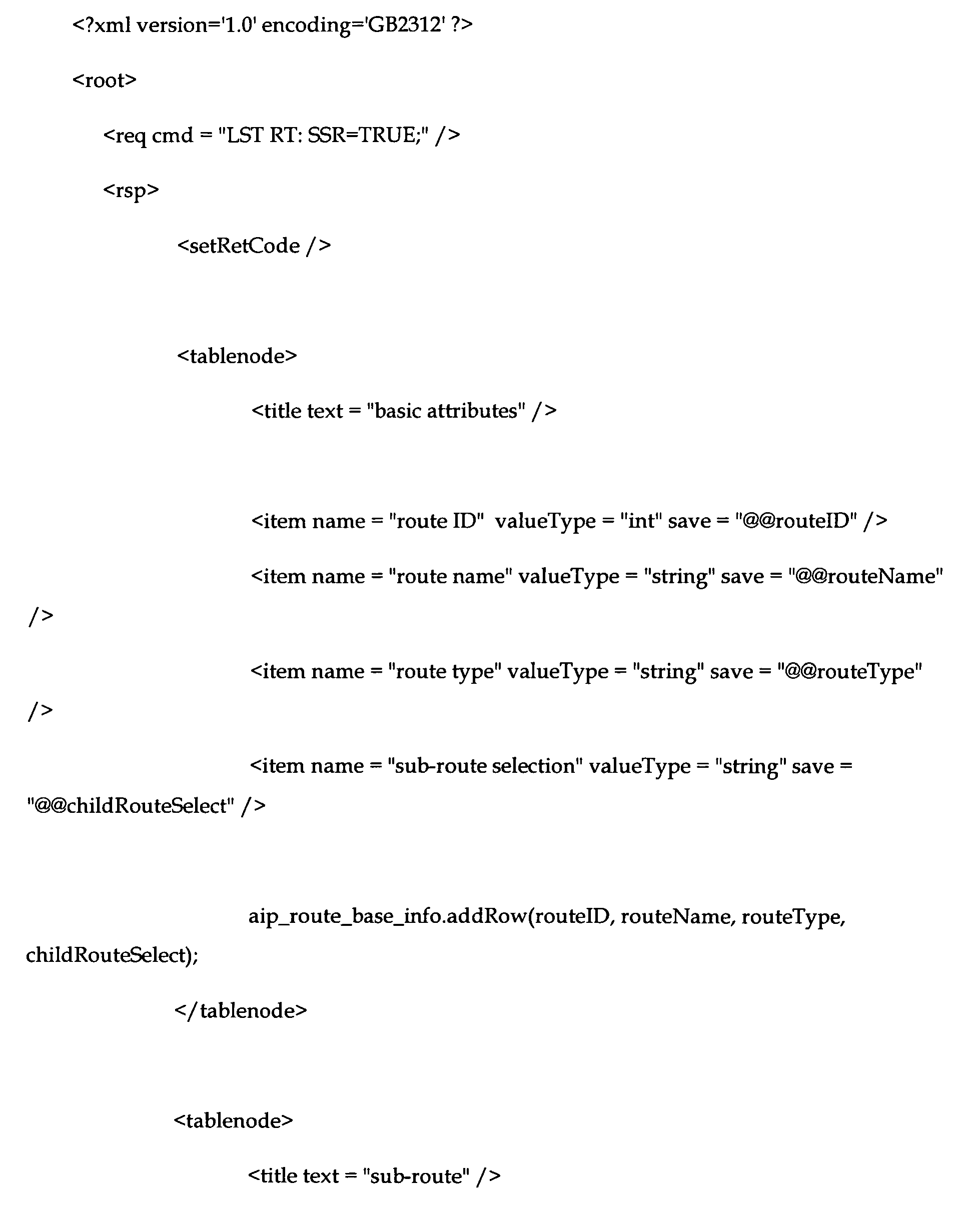

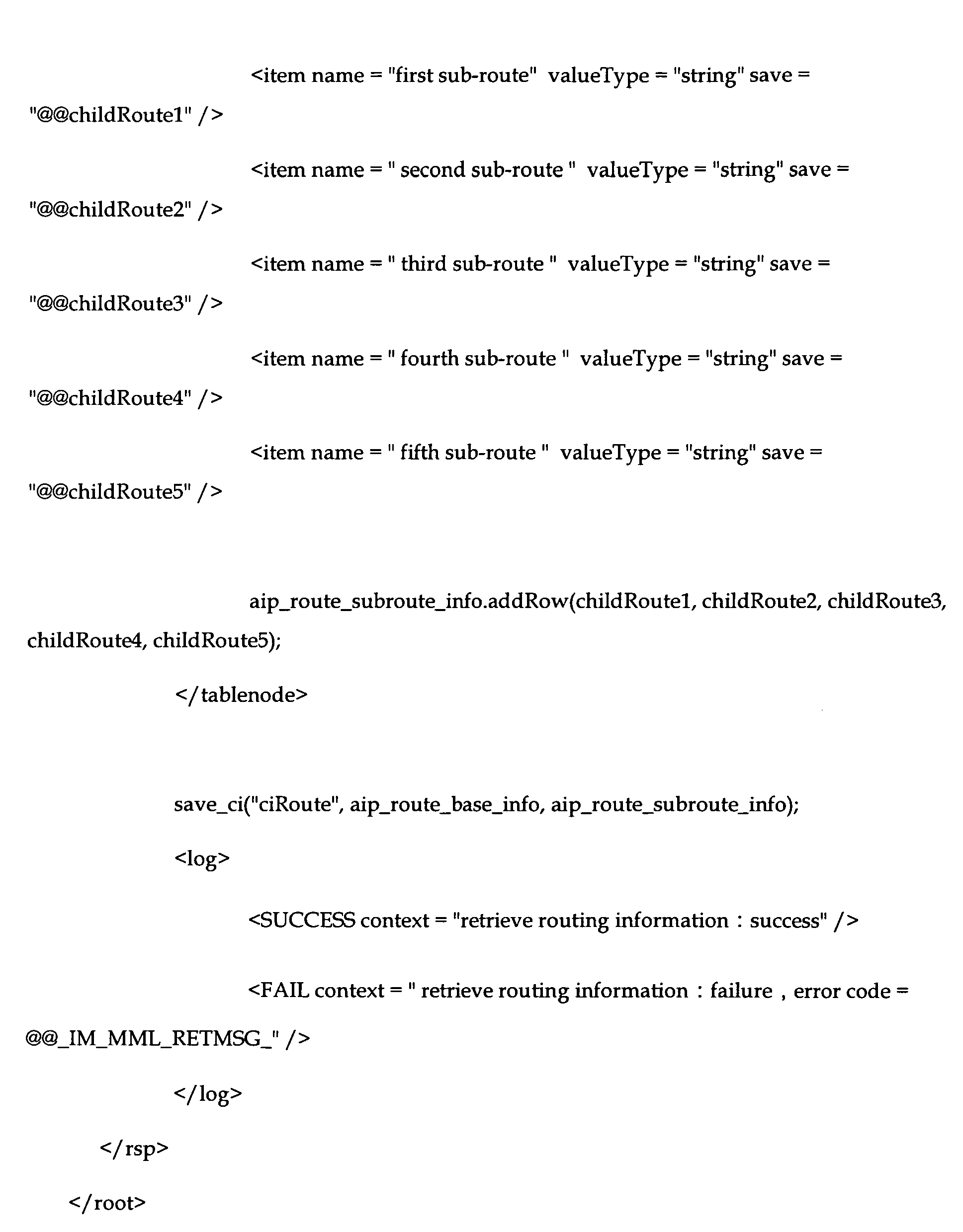

Detailed Descriptions of the Sript.
(1) A. The command is issued in tag <req>
(2) The <rsp> section handles the outcome of the operation
(3) Tag <setRetCode> retrieves the return code
(4) The returned MML report is processed in the <tablenode> section
(5) addRow function converts the MML report into the records for the database
(6) save_ci() function saves the record in the database
(7) The operation is recorded in the <log> section

The following example presents a complete procedure of how to add a new network device configuration function. The example shows how to add "AIP (Asynchronous-Transfer-Mode Interface Processor) routing information" to a network device, Dev_A. The attribute table of the function is in the database and the name of the attribute is "ciRoute".

The operator first modifies the configuration file of the configuration function sub-panel. This operation adds a new node to the configuration sub-panel (112) in the front -end user interface (110). The following code snippet is added to the configuration file. 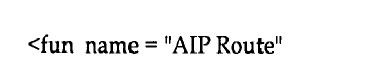 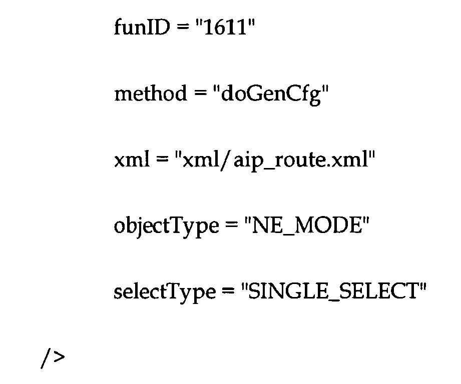 wherein
- "AIP Route" is the name of the new configuration function for "AIP routing information"
- funID="1611" is the function ID
- method ="doGenCfg"is the name of the function that is used to generate the parameter/ attribute sub-panel
- xml = "xml/aip_route.xml" is the XML script that defines the layout and look-and-feel of the parameter/attribute sub-panel.

The next step is to create the XML script aip_route.xml.

FIG 8 is the screen shot of the parameter/ attribute sub-panel for this example.

The tags in the XML script define the following columns in the attribute table. They are status, route name, route ID, selection of sub-route, the sub-route 1, the sub-route 2, the sub-route 3, the sub-route 4 and the sub-route 5. There are nine columns in total. The tags also specify how to generate the right click menus and how to setup the menu sub-items with actions such as "confirm addition", "confirm deletion", "confirm changes" and "confirm all items". The tags also specify how to create button such as "query", "print" and "save".

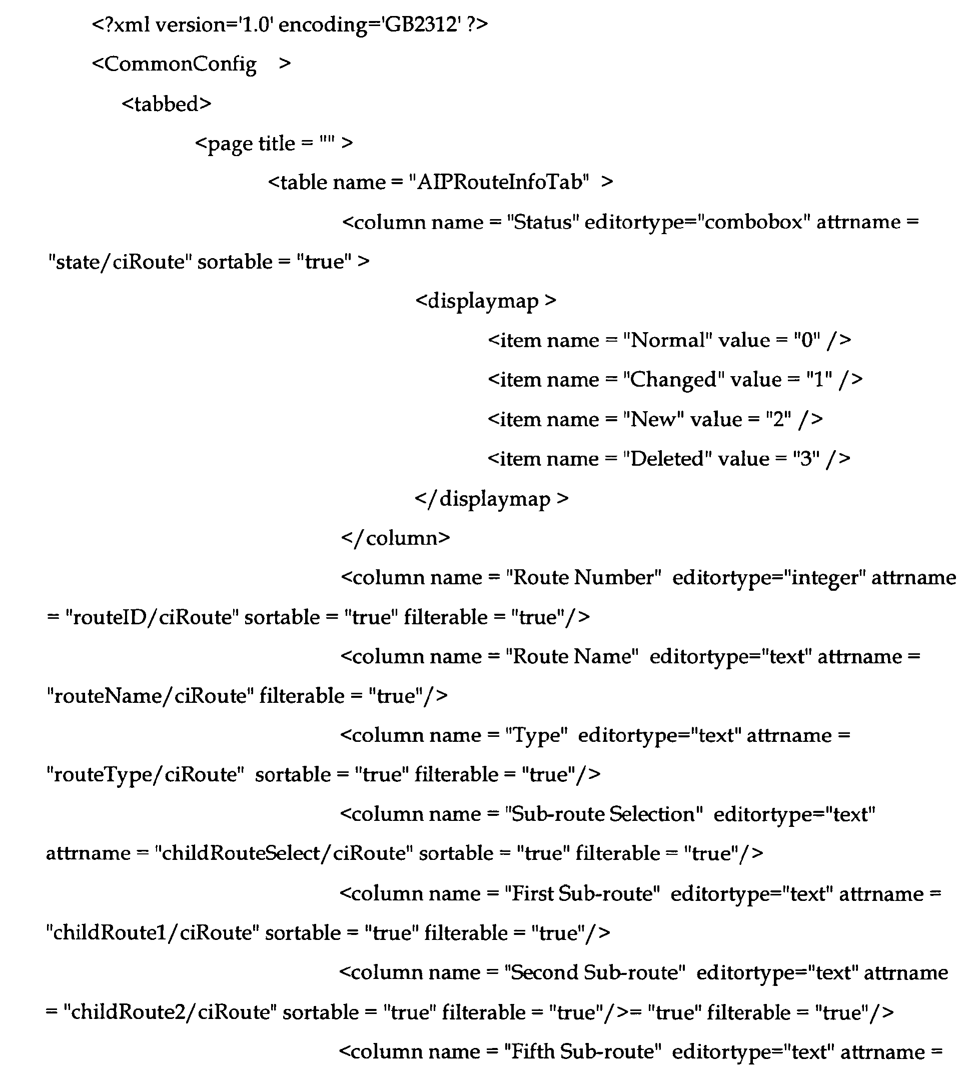

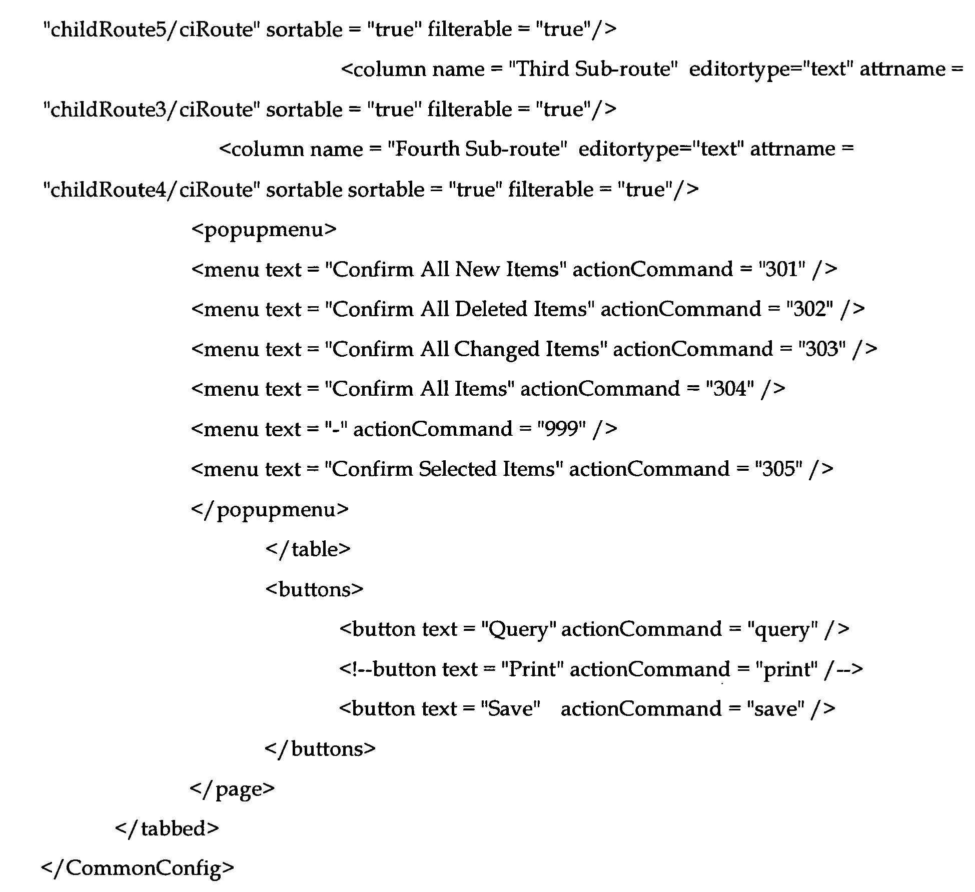

The next step is to add a section for the new configuration function in the XML command script in the back-end management server. 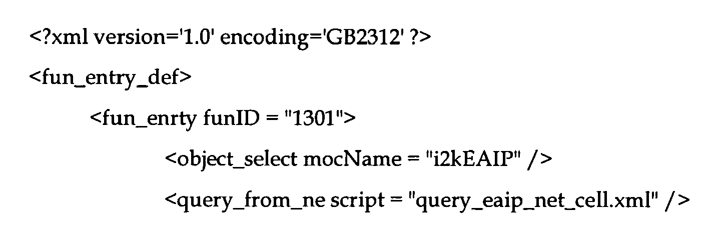 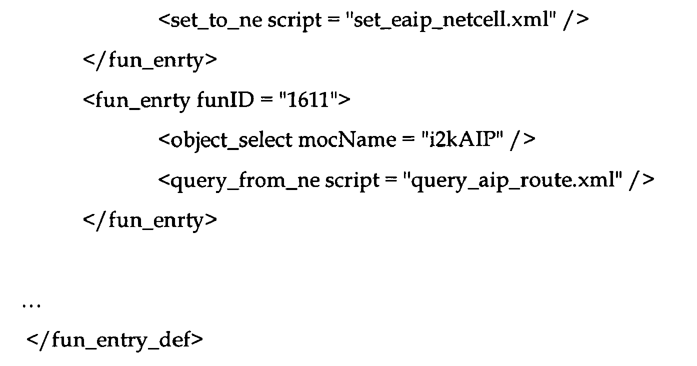 The next step is to create the XML script for "AIP routing information." The name of the script in this example is query_aip_route.xml.

The XML script [see example in [0064]] specifies that the report returned from the network device is in MML (Human Machine Language) format. The information of the report is realized with the following tag <req cmd = "LST RT: SSR=TRUE;" / >. LST RT: SSR=TRUE is the configuration command issued to the network device. It queries the routing information in the network device "i2kEAIP". Below is the report returned form the network device;

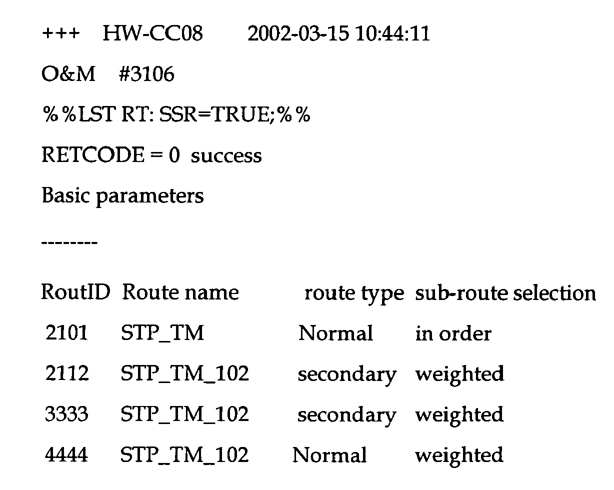

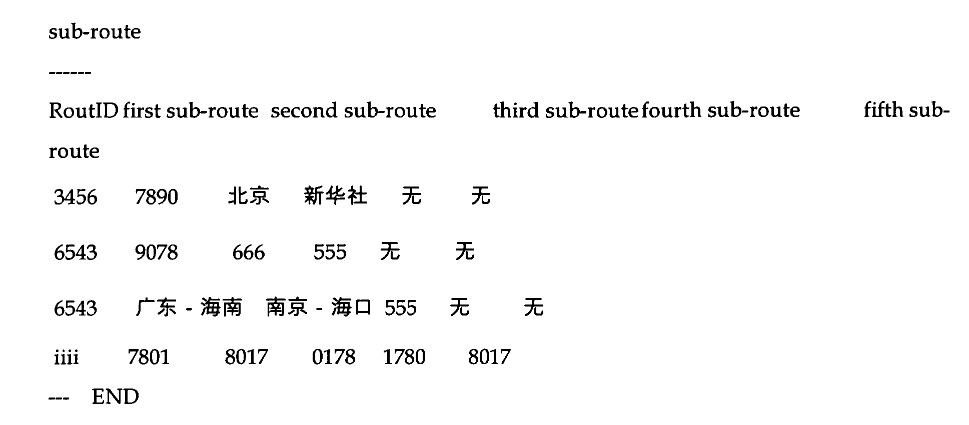

The XML script can be broken down into the following operations.
A. Issuing a Command 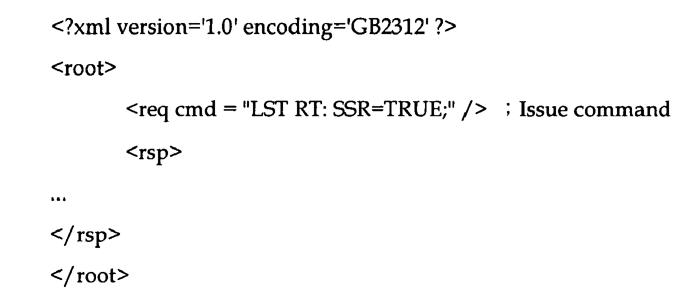
B. Retrieving an MML Report 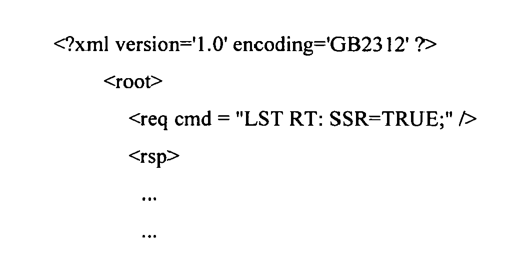 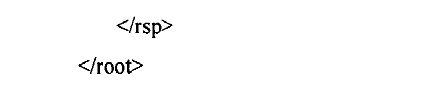
C. Processing the MML Report 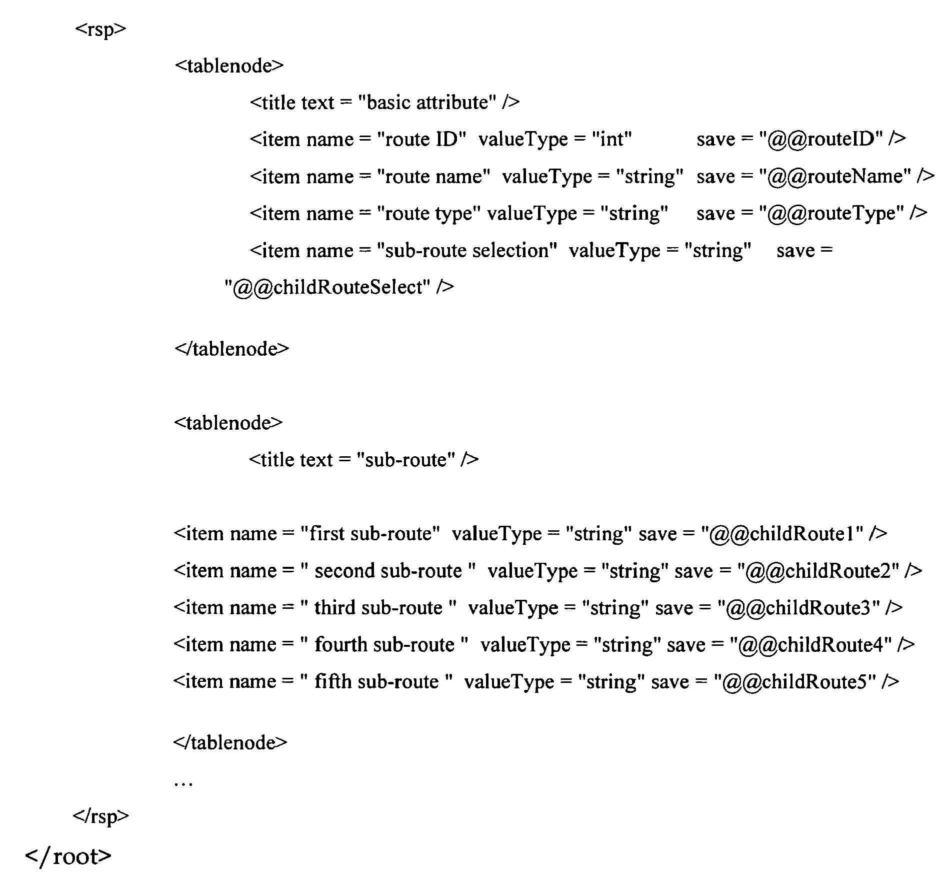
D. Saving the Attribute Value in the Database

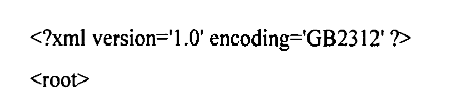

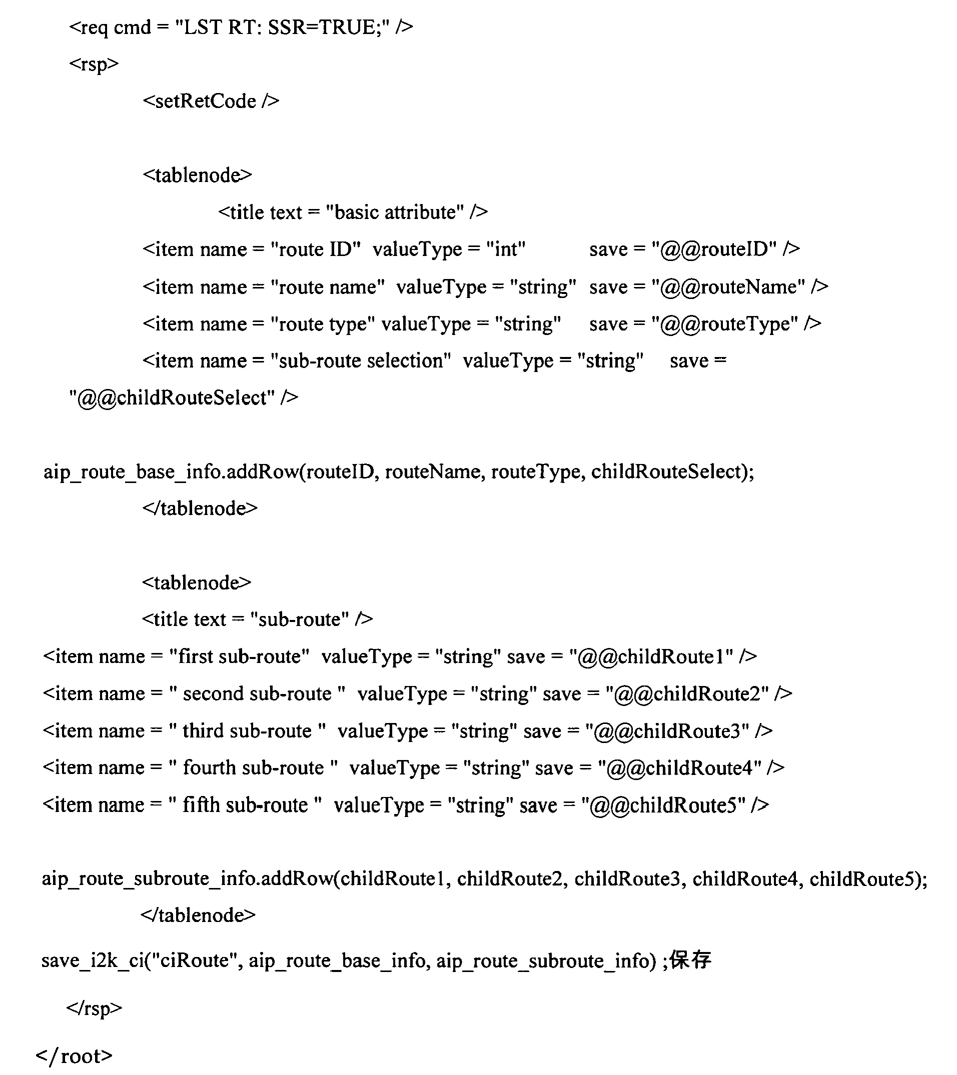

The example above describes how this invention provides a unified end-to-end framework for network device configuration management system (100) that simplifies the process of adding or modifying network device configuration functions.

This invention is a script based network device configuration management system (100). It is a system that only uses XML scripts for the front-end user interface and back-end management server to create the network device configuration management system (100) according to one embodiment of the present invention. It reduces the amount of time for adding a new configuration function or modifying the existing configuration function. When a new configuration function is added to the network device configuration management system (100), there is no need to define new APIs or to develop and compile new software.

This invention also solves the problem of requiring an increasing number of configuration functions resulting from adding network devices to the network. With more configuration functions, the development of the network device configuration management system (100) is getting more and more costly. XML is a high level language, and therefore, to complete a configuration function using the XML script-based system only takes about 10% of the code space that would be required if the conventional method is used.

In addition to the advantages highlighted in the previous paragraphs, this invention also helps the operator of the network device configuration management system (100) to make improvement.

The above illustration provides many different embodiments or embodiments for implementing different features of the invention. Specific embodiments of components and processes are described to help clarify the invention. These are, of course, merely embodiments and are not intended to limit the invention from that described in the claims.

Although the invention is illustrated and described herein as embodied in one or more specific examples, it is nevertheless not intended to be limited to the details shown, since various modifications and structural changes may be made therein without departing from the spirit of the invention and within the scope and range of equivalents of the claims. Accordingly, it is appropriate that the appended claims be construed broadly and in a manner consistent with the scope of the invention, as set forth in the following claims.

## Claims

1. A network device configuration management system comprising:
at least one control terminal for an operator to enter one or more network device configurations;
at least one user interface module for generating a first set of command scripts written in a first predetermined general-purpose markup language in response to the entered network device configuration inputs; and
at least one management server for generating one or more network device configuration instructions from a second set of command scripts written in a second predetermined general-purpose markup language to configure one or more network devices,
wherein the second set of command scripts are retrieved by the corresponding first set of command scripts.

2. The network device configuration management system of claim 1, wherein the user interface module further comprises one or more configuration files for defining user interfaces, configurable parameters and attributes of the network devices and the first set of command scripts corresponding to the configurable parameters and attributes.

3. The network device configuration management system of claim 1, wherein the management server further comprises at least one virtual machine for parsing and translating the second set command scripts and for issuing the configuration instructions to corresponding network devices, and for collecting outcomes of operations by the network devices.

4. The network device configuration management system of claim 3 further comprising at least one command interface module for translating and relaying first set of command scripts from the user interface module to the management server and for reporting the outcomes of operations by the network devices to the user interface module.

5. The network device configuration management system of claim 1, wherein the management server further comprises at least one storage unit for storing the second set of command scripts.

6. The network device configuration management system of claim 1, wherein both the first and second predetermined general-purpose markup languages are Extensible Markup Language (XML).

7. A method for configuring network devices comprising:
generating a first set of command scripts written in a first predetermined general-purpose markup language in response to network device configuration inputs entered by one or more operators on one or more control terminals;
generating one or more network device configuration instructions from a second set of command scripts written in a second predetermined general-purpose markup language, wherein the second set of command scripts are retrieved by the corresponding first set of command scripts; and
configuring corresponding network devices by the network device configuration instructions.

8. The method of claim 7, wherein the generating the first set of command scripts further comprises generating the first set of command scripts from one or more configuration files.

9. The method of claim 7 further comprising:
collecting outcomes of operations by the network devices; and
displaying the outcomes of operations to the control terminals.

10. The method of claim 7, wherein the second set of command scripts retrieved by the corresponding first set of command scripts further comprises retrieving the second set of command scripts from one or more storage units.

11. The method of claim 7, wherein both the first and second predetermined general-purpose markup languages are Extensible Markup Language (XML).

12. The method of claim 7 further comprising:
adding a third set of command scripts written in the first predetermined general-purpose markup language; and
adding a fourth set of command scripts written in the second predetermined general-purpose markup language corresponding to the third command scripts,
when adding new network device configuration functions.

13. The method of claim 7 further comprising:
modifying one or more of the first set of command scripts; and
modifying one or more of the second set of command scripts corresponding to the modified first set of command scripts,
when modifying an existing network device configuration function.

14. A method for configuring network devices comprising:
adding a first set of command scripts written in a first predetermined general-purpose markup language; and
adding a second set of command scripts written in a second predetermined general-purpose markup language corresponding to the first set of command scripts,
when adding one or more new network device configuration functions.

15. The method of claim 14 further comprising:
generating a third set of command scripts written in a first predetermined general-purpose markup language in response to network device configuration inputs entered by operators on one or more control terminals;
generating one or more network device configuration instructions from a fourth set of command scripts written in a second predetermined general-purpose markup language, wherein the fourth set of command scripts are retrieved by the corresponding third set of command scripts; and
configuring corresponding network devices by the network device configuration instructions.

16. The method of claim 15, wherein the generating the third set of command scripts further comprises generating the third set of command scripts from one or more configuration files.

17. The method of claim 15 further comprising:
collecting outcomes of operations by the network devices; and
displaying the outcomes of operations to the control terminals.

18. The method of claim 15, wherein the fourth set of command scripts retrieved by the corresponding third set command scripts further comprises retrieving the fourth set of command scripts from one or more storage units.

19. The method of claim 14, wherein both the first and second predetermined general-purpose markup languages are Extensible Markup Language (XML).

20. The method of claim 14 further comprising:
modifying a third set of command scripts; and
modifying a fourth set of command scripts corresponding to the modified third set of command scripts,
when modifying one or more existing network device configuration functions.
